# EUROPEAN PATENT SPECIFICATION

(11) **EP 2 075 147 B1**
(45) Date of publication and mention of the grant of the patent: **07.07.2010**
(21) Application number: 07425852.6
(22) Date of filing: 31.12.2007
(51) Int. Cl.: B60H 1/00

(54) **Control board for air-conditioning systems for vehicles**
Bedieneinheit für eine Fahrzeugklimaanlage
Dispositif de commande pour installation de climatisation d'une véhicule

(43) Date of publication of application: 01.07.2009
(73) Proprietor: DENSO THERMAL SYSTEMS S.p.A., 10046 Poirino (Torino) (IT)
(72) Inventor: Lanfranco, Francesco, 10046 Poirino (Torino) (IT)
(74) Representative: Marchitelli, Mauro

(56) References cited:
- EP-A- 1 708 217
- FR-A- 2 693 408
- FR-A- 2 743 163

## Description

The present invention relates to a control board for air-conditioning systems for vehicles. More precisely, the invention regards a control board comprising a rotary knob, which issues a first command, and a push-button switch, which issues a second command. Typically, the rotary knob is provided for adjusting the speed of the fan that produces the flow of air introduced into the passenger compartment of the vehicle, and the push-button switch is used for issuing a command for switching-on or switching-off the air-conditioning system.

In traditional solutions, the control knob and the push-button switch are coaxial to one another and grouped together in a single component provided with a movement of rotation and a push-button movement. In said known solutions, a switching device is provided, having an input shaft, which can rotate about its own axis for issuing the first command and is mobile in an axial direction between a first position and a second position for issuing the second command. EP 1708217 A1 discloses a control board according to the preamble of claim 1.

In certain applications, it is desirable to have the rotary knob and the push-button switch separate from one another instead of integrated in one and the same member. In these cases, it is necessary to provide two separate switches for the two control functions and a multifunction electronic card. These solutions are consequently more costly than the solution that envisages a single switching device with a dual function, with the shaft that is able to rotate and is axially mobile.

The object of the present invention is to provide a simple and economically advantageous solution for obtaining a control board with rotary knob and push-button switch separate from one another.

According to the present invention, this object is achieved by a control board having the characteristics forming the subject of Claim 1.

The present invention will now be described in detail with reference to the attached drawings, which are provided purely by way of non-limiting example and in which:
- Figure 1 is a perspective view of a control board according to the present invention; and
- Figure 2 is a partially exploded perspective view of the control board of Figure 1.

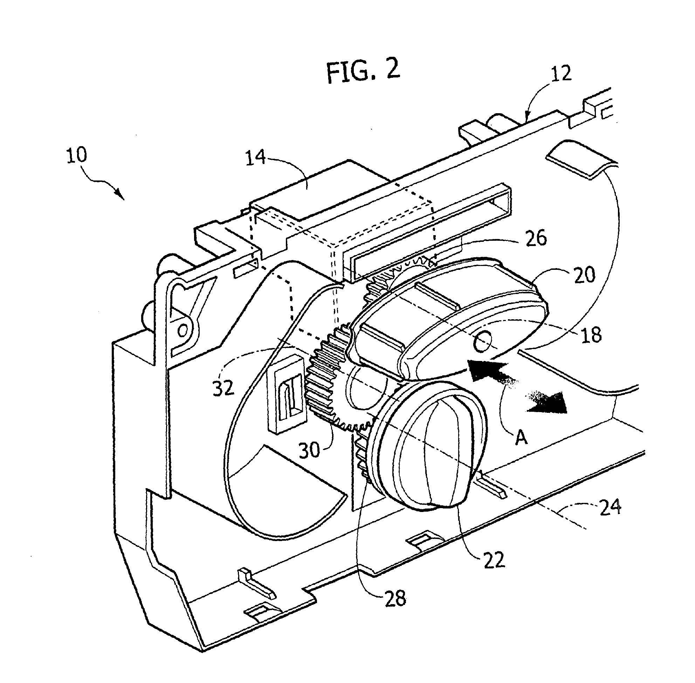

With reference to the figures, designated by 10 is a control board for air-conditioning systems for vehicles. The control board 10 comprises a support 12 fixed to which is a switching device 14. With reference to Figure 2, the switching device 14 has an input shaft 16 rotating about its own longitudinal axis 18. The input shaft 16 is moreover mobile in an axial direction between a first operative position and a second operative position. The movement of rotation about the axis 18 and the movement of axial translation of the shaft 16 are independent of one another. Rotation of the shaft 16 about the axis 18 issues a first command, whilst translation of the shaft 16 in the axial direction issues a second command of an on/off type. The first command can, for example, consist in the variation of the speed of rotation of a fan of the air-conditioning assembly. The second command can, for example, be a command for switching on/off the system for cooling the flow of air. The switching device 14 is of a type in itself known and is available on the market. Consequently, the constructional details of the switching device 14 are not described since they do not fall within the scope of the invention.

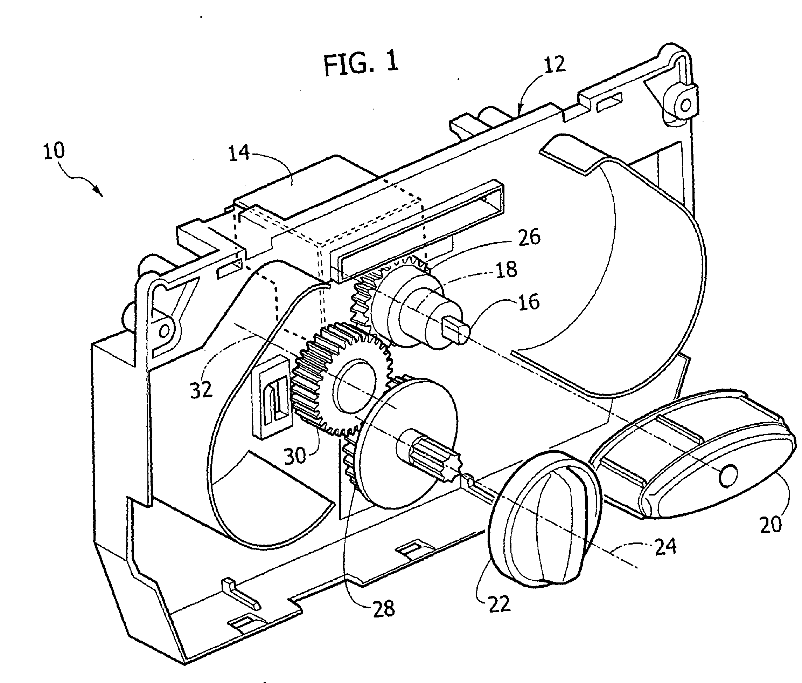

The control board 10 according to the present invention comprises a push-button 20 designed to press on the front end of the shaft 16. The push-button 20 is rotatably uncoupled from the shaft 16 and is provided only with a movement of translation in the axial direction indicated by the double-headed arrow A in Figure 1. The pressure exerted on the push-button 20 switches the operating state of the switching device 14 between two operative positions corresponding, respectively, to an ON command and to an OFF command.

The control board 10 according to the present invention moreover comprises a rotary knob 22, which can rotate about an axis 24 parallel to and set at a distance from the axis of rotation 18 of the input shaft 16 of the switching device 14.

The rotary knob 22 is connected in rotation to the input shaft 16 by means of a gear train, which comprises a first gear 26, which is coaxial to the input shaft 16, and a second gear 28, which is coaxial to the rotary knob 22. In the embodiment illustrated in the figures, a third gear 30 is provided, which meshes simultaneously with the first gear and with the second gear 28. The first gear 26 is preferably fixed with respect to the input shaft 16, and the second gear 28 is fixed with respect to the rotary knob 22 and is carried by the support 12 in such a way that it is free to rotate about the axis 24. The third gear 30 is carried by the support 12 in such a way that it is free to rotate about an axis 32 parallel to the axes 18 and 24.

Actuation in rotation of the rotary knob 22 brings about rotation of the input shaft 16 for issuing the aforesaid first command. The rotation of the input shaft 16 controlled by the rotary knob 22 does not modify the position of the push-button 20, which is rotatably free from the input shaft 16. The train of gears 26, 28, 30 can provide a drive ratio different from 1 in the case where the operating angle of the switching device 14 differs from the operating angle of the rotary knob 22. The gears 26, 28, 30 can be transparent in order to provide a light guide for lighting ideograms present on the control knob 22 or on the outer surface of the control board.

The arrangement illustrated enables the rotary knob 22 to be set in a different position from the push-button 20. By varying the size of the gears 26, 28, 30 and/or the number of said gears, it is possible to vary the distance between the axes 18 and 24. This solution is characterized by a high economy since it does not require a multifunction electronic card for performing two commands with two control members 20, 22 independent of one another. The solution according to the present invention moreover enables use of a standard switching device 14 common to different versions of control boards.

## Claims

1. A control board for air-conditioning systems for vehicles, comprising a support (12) bearing a switching device (14) having an input shaft (16), which is able to rotate about its own axis (18) for issuing a first command and is mobile in an axial direction for issuing a second command independent of said first command,
and comprising a control push-button (20), which is mobile in said axial direction (A) for issuing said second command, and a rotary knob (22), which can rotate for issuing said first command, said control board being **characterized in that** the rotary knob (22) being able to rotate about an axis (24) parallel to and set at a distance from the axis of rotation (18) of said input shaft (16) and being connected in rotation to the input shaft (16) by means of a train of gears (26, 28, 30).

2. The control board according to Claim 1, **characterized in that** said train of gears (26, 28, 30) provides a drive ratio different from 1.

3. The control board according to Claim 1 or Claim 2, **characterized in that** it comprises a first gear (26) coaxial to said input shaft (16) and a second gear (28) coaxial to said rotary knob (22).

4. The control board according to Claim 3, **characterized in that** it comprises a third gear (30), which is able to rotate about an axis (32) parallel to the axes of rotation (18, 24) of the input shaft (16) and of the rotary knob (22).

5. The control board according to any one of the preceding claims, **characterized in that** said push-button (20) is rotatably free from said input shaft (16).

6. The control board according to any one of the preceding claims, **characterized in that** said push-button (20) controls switching-on and switching-off of an air-cooling system, and the rotary knob (22) controls the speed of rotation of the fan of the air-conditioning assembly.

## Patentansprüche

1. Bedienfeld für Klimaanlagen in Fahrzeugen, das eine Halterung (12) aufweist, die ein Schaltgerät (14) mit einer Eingangswelle (16) trägt, die sich um ihre eigene Achse (18) drehen kann, um einen ersten Befehl auszugeben, und die in axialer Richtung beweglich ist, um einen vom ersten Befehl unabhängigen zweiten Befehl auszugeben, und das einen Steuerdruckknopf (20) aufweist, der in dieser axialen Richtung (A) beweglich ist, um den zweiten Befehl auszugeben, und einen Drehknopf (22), der zum Ausgeben des ersten Befehls gedreht werden kann,
wobei das Bedienfeld **dadurch gekennzeichnet ist, dass** der Drehknopf (22) um eine Achse (24) gedreht werden kann, die parallel zur und im Abstand von der Rotationsachse (18) der Eingangswelle (16) verläuft und bei Rotation mit der Eingangswelle (16) mittels eines Getriebezugs (26, 28, 30) verbunden ist.

2. Bedienfeld nach Anspruch 1, **dadurch gekennzeichnet, dass** der Getriebezug (26, 28, 30) ein Antriebsverhältnis ungleich 1 bereitstellt.

3. Bedienfeld nach Anspruch 1 oder 2, **dadurch gekennzeichnet, dass** es ein zur Eingangswelle (16) koaxiales erstes Zahnrad (26) und ein zum Drehknopf (22) koaxiales zweites Zahnrad (28) aufweist.

4. Bedienfeld nach Anspruch 3, **dadurch gekennzeichnet, dass** es ein drittes Zahnrad (30) aufweist, das sich um eine Achse (32) drehen kann, die parallel zu den Rotationsachsen (18, 24) der Eingangswelle (16) und des Drehknopfes (22) verläuft.

5. Bedienfeld nach einem der vorigen Ansprüche, **dadurch gekennzeichnet, dass** der Druckknopf (20) gegenüber der Eingangswelle (16) frei drehbar ist.

6. Bedienfeld nach einem der vorigen Ansprüche, **dadurch gekennzeichnet, dass** der Druckknopf (20) das Ein- und Ausschalten eines Luftkühlsystems steuert und der Drehknopf (22) die Drehzahl des Ventilators der Klimaanlage steuert.

## Revendications

1. Tableau de commande pour systèmes de conditionnement d'air pour véhicules, comprenant un support (12) supportant un dispositif de commutation (14) ayant un arbre d'entrée (16) qui peut tourner autour de son propre axe (18) pour émettre une première commande et est mobile dans une direction axiale pour émettre une seconde commande indépendante de ladite première commande et comprenant un bouton poussoir de commande (20) qui est mobile dans ladite direction axiale (A) pour émettre ladite seconde commande, et un bouton rotatif (22) qui peut tourner pour émettre ladite première commande, ledit tableau de commande étant **caractérisé en ce que** le bouton rotatif (22) peut tourner autour d'un axe (24) parallèle à et placé à une certaine distance de l'axe de rotation (18) dudit arbre d'entrée (16) et étant raccordé en rotation à l'arbre d'entrée (16) au moyen d'un train d'engrenages (26, 28, 30).

2. Tableau de commande selon la revendication 1, **caractérisé en ce que** ledit train d'engrenages (26, 28, 30) fournit un rapport d'entraînement différent de 1.

3. Tableau de commande selon la revendication 1 ou la revendication 2, **caractérisé en ce qu'**il comprend un premier engrenage (26) coaxial audit arbre d'entrée (16) et un deuxième engrenage (28) coaxial audit bouton rotatif (22).

4. Tableau de commande selon la revendication 3, **caractérisé en ce qu'**il comprend un troisième engrenage (30) qui peut tourner autour d'un axe (32) parallèle aux axes de rotation (18, 24) de l'arbre d'entrée (16) et du bouton rotatif (22).

5. Tableau de commande selon l'une quelconque des revendications précédentes, **caractérisé en ce que** ledit bouton poussoir (20) est libre du point de vue de la rotation par rapport audit arbre d'entrée (16).

6. Tableau de commande selon l'une quelconque des revendications précédentes, **caractérisé en ce que** ledit bouton poussoir (20) commande la mise en marche et l'arrêt du système de refroidissement d'air, et le bouton rotatif (22) commande la vitesse de rotation du ventilateur de l'ensemble de conditionnement d'air.
